Europäisches Patentamt

European Patent Office

Office européen des brevets

(19)

(11) Veröffentlichungsnummer: **0 157 760**
A2

## (12) EUROPÄISCHE PATENTANMELDUNG

(21) Anmeldenummer: 85890085.5

(22) Anmeldetag: 02.04.85

(51) Int. Cl.⁴: **C 04 B 28/16,** C 04 B 38/10

(30) Priorität: 02.04.84 AT 1116/84

(71) Anmelder: **RIGIPS Austria Gesellschaft mbH,**
**Unterkainisch 24, D-8990 Bad Aussee (Steiermark) (AT)**

(43) Veröffentlichungstag der Anmeldung: 09.10.85
**Patentblatt 85/41**

(72) Erfinder: **Schwarzl, Konrad, Dipl.-Ing.,**
**A-6372 Oberndorf 315 (AT)**

(84) Benannte Vertragsstaaten: **CH DE LI**

(74) Vertreter: **Beer, Otto, Dipl.-Ing. et al, Lindengasse 8,**
**A-1071 Wien (AT)**

(54) **Verfahren und Vorrichtung zur Herstellung von Porenanhydrit.**

(57) Bei einem Verfahren zum Herstellen von Belägen oder Gegenständen, die aus einer geschäumten Masse bestehen, wird das Bindemittel, das wenigstens zu 35% aus Anhydrit besteht, in Form eines Bindemittelleims mit einem Wasser-Bindemittelfaktor von 0,1 bis 0,6 mit 0,1 bis 3,0 Liter eines Luft-Wasser-Schaumes vermengt und die so erhaltene, aufgeschäumte Masse gegossen oder anderweitig verarbeitet.

Weiters wird eine Vorrichtung zur Durchführung des Verfahrens mit einem Schaumgenerator (3) und einem Mischgerät (2) zur Herstellung des Bindemittelleims vorgeschlagen, bei der unter der Austrittsöffnung eines Mischgerätes (2), in das eine von einem Schaumgenerator (3) kommende Leitung (4) für den Schaum einmündet, ein offener Vorratsbehälter (8) für das Gemisch aus Schaum und Bindemittelleim angeordnet und an dem Ausgang des Vorratsbehälters (8) eine Fördereinrichtung (5) zum Fördern des Gemisches aus Schaum und Bindemittelleim zur Verarbeitungsstelle angeschlossen ist.

## Verfahren und Vorrichtung zur Herstellung von Porenanhydrit

Die Erfindung betrifft ein Verfahren zum Herstellen von Belägen oder Gegenständen, die aus einer geschäumten Masse, die ein Bindemittel auf Kalziumsulfatbasis, das wenigstens zu 35, vorzugsweise wenigstens 40 % aus Anhydrit besteht, enthält, bestehen oder eine solche Masse enthalten, wobei aus Wasser, Luft und einem Schaumbildner ein Schaum erzeugt und mit dem das Bindemittel auf Kalziumsulfatbasis enthaltenden Bindemittel-Wassergemisch vermengt wird und die so erhaltene aufgeschäumte Masse gegossen oder anderweitig verarbeitet wird.

Zur Herstellung von porösen Baustoffen sind schon die verschiedensten Verfahren vorgeschlagen worden.

So beschreibt die DE-PS 421 777 ein Verfahren zur Herstellung von porösen Baustoffen, beispielsweise aus Gips, der mit Wasser gemischt wird, wobei gleichzeitig mit dem Anmachwasser ein auf mechanischem Wege hergestellter Schaum zum künstlichen Porösmachen des Werkstoffes verwendet wird. In Abänderung dieses bekannten Verfahrens schlägt die DE-PS 453 265 vor, anstelle eines auf mechanischem Wege gewonnenen Schaumes einen durch Gasentwicklung auf chemischem Wege hergestellten Schaum einzusetzen. Problematisch bei diesen bekannten Verfahren ist der Umstand, daß innerhalb der wegen des schnellen Abbindens von Gips nur sehr kurzen zur Verfügung stehenden Zeit für den Mischvorgang eine absolut homogene Masse praktisch nicht erreicht werden kann.

Um diesem Nachteil abzuhelfen, wird in der DE-PS 1 030 234 vorgeschlagen, zur Herstellung von Porengips den einer Schaummasse in fester Form zugegebenen Gips mit dieser in einem Mischbehälter zu vermischen, wobei im Mischbehälter ein Rührwerk vorgesehen ist, das als das Mischgut von oben

- 2 -                    0157760

und von unten ansaugende und radial ausschleudernde Mischschleuder ausgebildet ist.

Anderseits wird in der DE-AS 27 31 923 vorgeschlagen,
das wegen des raschen Abbindens des Gipsmörtels nur
schwer zu bewerkstelligende, homogene Vermischen von
Schaum und Gips so auszuführen, daß ein aus Wasser, Luft
und Luftporenbilder gebildeter Schaum dem Gipsmörtel unter
Druck zugeführt wird. Weiters wird in der DE-AS 27 31 923
vorgeschlagen, den Schaum dem Gipsmörtel unmittelbar vor
dessen Verarbeitung zweckmäßigerweise bei der Förderung
des Gipsmörtels in einer Gipsfördervorrichtung zuzumischen.

In der AT-PS 363 370 ist ein Verfahren zur Herstellung
von porösen Gipsmassen, die Anhydrit als Bindemittel auf
Kalziumsulfatbasis enthalten, beschrieben, bei dem die
durch das rasche Abbinden von Gips bedingte Problematik
dadurch gelöst werden soll, daß der durch Einleiten von
Luft in eine wässerige Lösung oberflächenaktiver Substanzen erzeugte Schaum mit Gips und Wasser in einer
Mischzone vermischt wird, wobei Wasser und Gips unabhängig voneinander in einem bestimmten Gewichtsverhältnis
zugegeben werden sollen. Das in der AT-PS 363 370 beschriebene Verfahren setzt aber die Verwendung ganz
bestimmter oberflächenaktiver Substanzen voraus, da die
oberflächenaktiven Substanzen zugleich als Abbindeverzögerer für den Gips dienen sollen. Dies hat zur Folge,
daß die Zumischung der gleichzeitig als Abbindeverzögerer
dienenden oberflächenaktiven Substanzen sehr genau erfolgen muß und nur in engen Grenzen (0,01 bis 0,08 Gew.-%,
bezogen auf den Gips) vorgenommen werden kann.

Mit den zuvor genannten, bekannten Verfahren ist die
Problematik der Herstellung von porösen Massen, die ein
Bindemittel auf Basis von Kalziumsulfat enthalten, nicht
zufriedenstellend gelöst, da einerseits eine kontinuierliche Herstellung von porösen Massen nicht möglich ist
und anderseits die durch das rasche Abbinden von Gips
gegebene Problematik nicht zufriedenstellend gelöst ist.

Der Erfindung liegt die Aufgabe zugrunde, ein Verfahren
und eine Vorrichtung zur Herstellung der eingangs
genannten porösen Massen anzugeben, welche die geschilderten Nachteile nicht aufweist.

Dies wird bei einem Verfahren der eingangs genannten
Gattung dadurch erreicht, daß das Bindemittel in Form
eines Bindemittelleims mit einem Wasser-Bindemittelfaktor
von 0,1 bis 0,6, vorzugsweise 0,3 bis 0,45 verwendet
wird und daß je Kilogramm Bindemittelleim 0,1 bis 3,0,
vorzugsweise 0,3 bis 2,0 Liter des zuvor gebildeten
Luft-Wasser-Schaumes zugemischt werden.

Mit dem Verfahren gemäß der Erfindung kann eine geschäumte
Masse ("Porenanhydrit") hergestellt werden, deren Rohdichte je nach Verwendungszweck zwischen 0,1 und 2,0,
vorzugsweise zwischen 0,4 und 1,2 kg/dm$^3$ einstellbar ist.
Der erfindungsgemäß erhältliche Porenanhydrit kann beispielsweise für die Herstellung von wärmedämmenden
Innenputzschichten, wärmedämmenden und feuerhemmenden
Dachbodenbeschichtungen, als wärmedämmende Ausgleichsschicht unter Estrichen sowie als Rohstoff für Zwischenwandsteine verwendet werden.

Der Erfindung liegt der Gedanke zugrunde, durch die Kombination eines in einem schaumerzeugenden Gerät erzeugten
Schaumes mit einem in einem kontinuierlich arbeitenden
Mischgerät hergestellten Bindemittelleim auf Basis eines
Kalziumsulfatbinders, vorzugsweise kontinuierlich zu erzeugen. Dieser Porenanhydrit kann durch eine Pumpe, vorzugsweise eine Schneckenpumpe, an die Verwendungsstelle
befördert werden. Zur Bildung des Porenanhydrits werden
Schaum und Bindemittelleim miteinander intensiv vermischt.

- 4 -

0157760

Die erfindungsgemäß herstellbare geschäumte Masse ist nicht nur besonders stabil, sondern schwindet auf Grund der erfindungsgemäßen Verfahrensweise beim Abbinden auch nicht (Volumenskonstanz), so daß z.B. große Flächen ohne Fugen selbst dann in einem Zug verlegt werden können, wenn die geschäumte Masse in unterschiedlichen Schichtstärken aufgetragen wird. Die Volumenskonstanz der erfindungsgemäß erhältlichen, geschäumten Masse ist auch für die Herstellung von Gegenständen mit unterschiedlichen Wandstärken von erheblichem Vorteil, da aus ihr auch Gegenstände mit größeren Abmessungen und komplizierter Form einstückig herstellbar sind.

Im Rahmen der Erfindung kann man so vorgehen, daß der Masse als Magerungsmittel bis zu 30 %, vorzugsweise bis zu 20 % natürlicher Anhydrit mit einer Korngröße von bis zu 1,0 mm zugesetzt wird. Diese Maßnahme ist für die praktische Verwendung der erfindungsgemäß herstellbaren, geschäumten Masse von Vorteil, wenn diese Masse durch Rohr- oder Schlauchleitungen zur Verarbeitungsstelle gefördert wird. Der erfindungsgemäß vorgenommene Zusatz von natürlichem Anhydrit, der keine hydraulischen Bindeeigenschaften besitzt, wirkt einem Zusetzen der Leitungen entgegen, da er die Leitungen wie Sand frei schleift.

Der Porenanhydrit kann, wie schon erwähnt, erfindungsgemäß mit verschiedenen Rohdichten hergestellt werden. Die zu erzielende Rohdichte ist abhängig vom Mischungsverhältnis Bindemittelleim zu Schaummenge.

Folgenden Mischungsverhältnissen von Bindemittelleim zu Schaum liegen nachstehend angeführte Rohdichten zugrunde:

| Bindemittel (kg) | (Schaum (1) | Rohdichte trocken (kg/dm$^3$) |
|---|---|---|
| 1 | 2,0 | ca. 0,4 bis 0,5 |
| 1 | 1,5 | ca. 0,5 bis 0,6 |
| 1 | 1,0 | ca. 0,7 bis 0,8 |
| 1 | 0,5 | ca. 1,0 bis 1,1 |
| 1 | 0,3 | ca. 1,2 bis 1,4 |

Die Rohdichte ist durch Regelung der Schaummenge im Schaumgenerator stufenlos innerhalb oben angeführter Grenzen beliebig einstellbar. Der erzeugte Schaum soll ein sehr stabiles Gefüge besitzen, damit bei der Vermischung mit dem Bindemittelleim die Schaumporen erhalten bleiben. Seine Herstellung aus einem Schaumkonzentrat und Wasser erfolgt in einem Schaumgenerator. Die Rohdichte des Schaumes liegt erfindungsgemäß bevorzugt zwischen 0,02 und 0,1 kg/dm$^3$, vorzugsweise zwischen 0,035 und 0,08 kg/dm$^3$ und beispielsweise bei 0,05 kg/dm$^3$.

Bei Anwendung der in Anspruch 3 gekennzeichneten Verfahrensvariante läßt sich anders als beim Stand der Technik eine besonders leichte geschäumte Masse, die dennoch stabil ist, erzeugen.

Für den besonderen Verwendungszweck des Porenanhydrits als dämmende Innenputzschicht werden der Bindemittelkombination ein haftverbessernder sowie ein das Standvermögen verbessernder Zusatz beigemengt. Für den Bereich der Dachbodenisolierung ist bei Bedarf eine wasserabweisende Zudosierung möglich. Der so erhaltene Porenanhydrit ist nahezu vollständig raumbeständig, d.h. er zeigt nur geringste Schwind- bzw. Quellerscheinungen und ist in einer Auftragsstärke ab 0,5 cm zu verwenden. Bis zu einer Rohdichte von 0,7 kg/dm$^3$ ist der Porenanhydrit nach ca. 20 Stunden begehbar, bei niedrigerer Rohdichte und der Verwendung als dämmende Innenputzschicht nach gleicher Zeit für eine weitere Putzbeschichtung ausreichend fest.

- 6 -

0157760

Nachstehend werden einige Beispiele des erfindungsgemäßen Verfahrens angegeben:

Beispiel 1: Porenanhydrit als wärme- und schalldämmende Ausgleichsschicht unter Estrichen:

Eine Mischung aus

| 70 - 100 % | synthetischem Anhydrit gemahlen, AB 20, |
| O - 30 % | natürlichem Anhydrit (als Magerungsmittel) O bis 1 mm Korngröße, |
| 0,8 - 1,2 % | Kaliumsulfat als Anreger, sofern dieser nicht schon im Anhydritbinder enthalten ist und |
| O - 0,05 % | Luftporenbildner |

wird einem kontinuierlich arbeitenden Mischgerät aufgegeben und mit Wasser zu einem Bindemittelleim vermischt. Diesem Bindemittelleim wird im selben Mischgerät ein in einem Schaumgenerator erzeugter, feinporiger, stabiler Schaum zudosiert. Nach dessen Vermischung mit dem Bindemittelleim entsteht ein homogener Porenanhydrit, dessen Naßgewicht zwischen 0,8 und 0,9 $kg/dm^3$ liegt. Der so erhaltene Porenanhydrit wird durch eine getrennt arbeitende Förderpumpe (vorzugsweise eine Schneckenpumpe) an die bis zu 200 m entfernt liegende Verwendungsstelle transportiert. Der Abbindeverlauf ist abhängig von der Rohdichte, wobei die Austrocknungszeit des Porenanhydrits aufgrund des hohen Porenvolumens kürzer ist als bei anhydritgebundenen Produkten höherer Dichte.

Wasser/Bindemittelfaktor kleiner 0,45
Schaummenge: ca. 1,0 l/kg Bindemittel
Trockenrohdichte: ca. 0,7 bis 0,8 $kg/dm^3$
Druckfestigkeit: größer 1,5 $N/mm^2$

Der so erzeugte Porenanhydrit zeigt eine sehr hohe Raumbeständigkeit, die ihn befähigt, Niveauunterschiede zwischen 1,0 und 10 cm ohne Rißbildung auszugleichen.

Beispiel 2: Porenanhydrit als feuerhemmende und wärmedämmende Dachbodenbeschichtung:

Eine Mischung aus

80 - 100 % synthetischem Anhydrit gemahlen (AB 20),

O - 20 % natürlichem Anhydrit, O bis 1 mm Korngröße, als Magerungsmittel,

0,5 % Kalkhydrat,

0,8 - 1,2 % Kaliumsulfat als Anreger, soferne nicht
schon im Anhydritbinder enthalten und

0,3 - 0,8 % Hydrophobierungsmittel

wird wie in Beispiel 1 gemischt und gefördert.

Wasser/Bindemittelfaktor kleiner 0,5

Schaummenge: ca. 1,3 l/kg Bindemittel

Naßgewicht des Porenanhydrits: ca. 0,7 - 0,8 $kg/dm^3$

Trockenrohdichte: ca. 0,6 - 0,7 $kg/dm^3$

Druckfestigkeit: größer 1,0 $N/mm^2$

Die Dachbodenbeschichtung wird bis zu 10 cm

stark verlegt, ist rißfrei und nach ca. 3 Tagen begehbar.


Beispiel 3: Porenanhydrit als wärmedämmende Innenputzschicht:

Eine Mischung aus

65 - 80 % synthetischem Anhydrit gemahlen (AB 20),

O - 15 % Stuckgips,

O - 20 % natürlichem Anhydrit, O - 1,0 mm Korngröße (als Magerungsmittel),

2 - 5 % Kalkhydrat,

0,4 - 1,0 % Kaliumsulfat, wenn nicht bereits im
synthetischen Anhydritbinder enthalten,

0,1 - 0,3 % Wasserretentionsmittel,

0,05 - 0,1 % Netzmittel,

0,03 - 0,05 % Standmittel (z.B. Stärkeäther) und

0,003 % Verzögerer

wird einer kontinuierlich arbeitenden Putzmaschine aufgegeben und in dieser mit Wasser zu einem Putzmörtel
vermischt (Wasser/Bindemittelfaktor kleiner 0,8). In
der Mischkammer der Putzmaschine wird ein in einem

Schaumgenerator produzierter, feinporiger, stabiler Schaum zugeführt und mit dem Putzmörtel zu Porenanhydrit zugemischt. Dieser für Putzzwecke geeignete Porenanhydrit wird mittels einer mit dem Mischer gekoppelten Schneckenpumpe über eine bis zu 20 m lange Förderschlauchleitung transportiert und durch eine Spritzdüse auf die Wand aufgetragen.

Beispiel 4: Porenanhydrit als Rohstoff für die Herstellung von Zwischenwandsteinen:

Eine Mischung aus

| | | | |
|---|---|---|---|
| O | – | 20 | % synthetischem Anhydrit gemahlen (AB 20), |
| 40 | – | 50 | % $\alpha$-Halbhydrat, |
| 30 | – | 60 | % natürlichem Anhydrit, 0,1 – 1 mm Korngröße, als Magerungsmittel, |
| 1 | – | 2 | % Schnellzement, |
| 0,05 | – | 0,08 | % Netzmittel und |
| 0,005 | % | | Verzögerer |

wird in einem Mischer mit Wasser zu einem Bindemittelleim klumpenfrei angerührt und mit einem in einem Schaumgenerator erzeugten, feinporigen, stabilen Schaum zu Porenanhydrit vermischt. Der so erhaltene Porenanhydrit wird in Formen gegossen und nach einer Erhärtungszeit von ca. 30 Minuten entformt.

Wasser/Bindemittelfaktor: kleiner 0,6 Schaummenge: ca. 0,5 – 0,6 l/kg Bindemittelmischung Trockenrohdichte: ca. 0,9 – 1,0 kg/dm$^3$

Druckfestigkeit: größer 3,0 N/mm$^2$.

Zur Herstellung des Porenanhydrits nach dem Verfahren der Erfindung sind verschiedene Vorrichtungen verwendbar.

Eine derartige Vorrichtung ist aus der DE-AS 27 31 923 bekannt. Diese weist einen mit einem Schaumgenerator und einem Mischgerät zur Herstellung des aus Wasser und

0157760

Bindemittel bestehenden Bindemittelleims auf, wobei das Mischgerät einen Abschnitt zur Mischung des Bindemittels mit Wasser aufweist und daß am Ende dieses Abschnittes im Mischgerät eine vom Schaumgenerator kommende Leitung für den Schaum einmündet. Nachteilig bei der Vorrichtung gemäß der DE-AS 27 31 923 ist einmal, daß das Mischgerät auch dazu dient, die geschäumte Masse zur Verarbeitungsstelle zu fördern. Dadurch ist man gezwungen ein Gerät zu verwenden, das sowohl mischt als auch fördert. Dies hat zur Folge, daß entweder die Mischung unvollständig ist oder die Förderleistung nicht hinreicht. Ein weiterer Nachteil der Vorrichtung gemäß der DE-AS 27 31 923 ist darin zu sehen, daß die geschäumte Masse dadurch erreicht wird, daß der Schaum dem Gipsmörtel unter Druck zugeführt wird und die geschäumte Masse unter Druck zur Verarbeitungsstelle gefördert wird. Dadurch expandieren die Gasblasen erst an der Verarbeitungsstelle, was insoferne nachteilig ist, daß die Schaumbildung in der Masse nur schwer kontrollierbar ist.

Diese Nachteile werden bei der erfindungsgemäß ausgebildeten Vorrichtung dadurch vermieden, daß unter der Austrittsöffnung des Mischgerätes ein oben offener Vorratsbehälter für das Gemisch aus Schaum und Bindemittelleim angeordnet ist und daß an dem Ausgang des Vorratsbehälters eine Fördereinrichtung, vorzugsweise eine Förderpumpe zum Fördern des Gemisches aus Schaum und Bindemittelleim zur Verarbeitungsstelle angeschlossen ist.

Bei der erfindungsgemäßen Vorrichtung treten die weiter oben geschilderten Nachteile nicht auf, da die Mischung aus Bindemittelleim und Schaum drucklos in den offenen Vorratsbehälter eintritt und in diesem kontrolliert expandieren kann. Da bei der erfindungsgemäßen Vorrichtung weiters eine von der Mischvorrichtung getrennte Fördervorrichtung vorgesehen ist, können diese Teile zur Erfüllung der ihnen zugeordneten Funktion optimal ausgelegt werden.

In einer vorteilhaften Ausführungsform ist gemäß einem Vorschlag der Erfindung vorgesehen, daß im Vorratsbehälter ein Fühler zum Erfassen des Füllgrades vorgesehen ist und daß die Antriebe des Schaumgenerators und des Mischgerätes bei Erreichen eines vorbestimmten Füllgrades des Vorratsbehälters vom Fühler angesteuert abschaltbar sind.

Nachfolgend werden drei Ausführungsformen der erfindungsgemäßen Vorrichtung beschrieben, wobei auf die Zeichnungen Bezug genommen wird. Es zeigt

Figur 1 schematisch eine erste Ausführungsform,

Figur 2 schematisch eine zweite Ausführungsform und

Figur 3 schematisch eine dritte Ausführungsform.

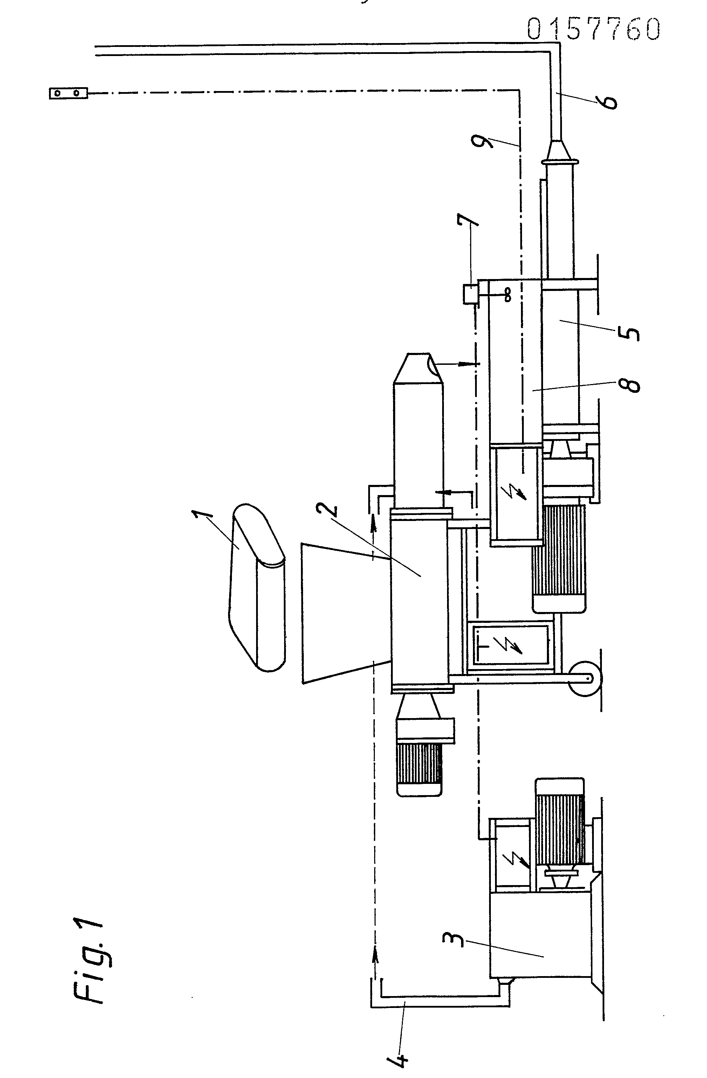

Die in Figur 1 gezeigte Vorrichtung ist in erster Linie zur Verwendung innerhalb eines Gebäudes gedacht. Die Bindemittelkombination wird als trocken vorgemischtes Gut in Säcken 1 an die Baustelle geliefert und sackweise in ein Mischgerät 2 aufgegeben. In diesem Mischgerät 2 erfolgt die Vermischung des Bindemittels mit Wasser zu einem Bindemittelleim, der mit einem aus einem Schaumgenerator 3 kommenden, über eine Leitung 4 zum Mischgerät 2 geförderten, stabilen Schaum zu Porenanhydrit vermischt wird. Dieses Gemisch wird einer Förderpumpe 5 aufgegeben, die das Mischgut durch eine bis zu 200 m lange Förderleitung 6 zur Verwendungsstelle bringt. Eine im Vorratsbehälter 8 befindliche Sonde 7 schaltet das Mischgerät 2 und den Schaumgenerator 3 ab, wenn im Vorratsbehälter 8 ein bestimmter Materialpegel überschritten wird. Die Aus- und Einschaltung der Pumpe 5 ist auch vor Ort durch eine Steuerleitung 9 möglich. Diese Variante gestattet die

0157760

Herstellung des Porenanhydrits auch im Gebäude, so daß auch bei Außentemperaturen unter 0° C gearbeitet werden kann.

Diese Gerätekombination ist geeignet, Porenanhydrit in einer Menge von ca. 75 - 80 l/min herzustellen.

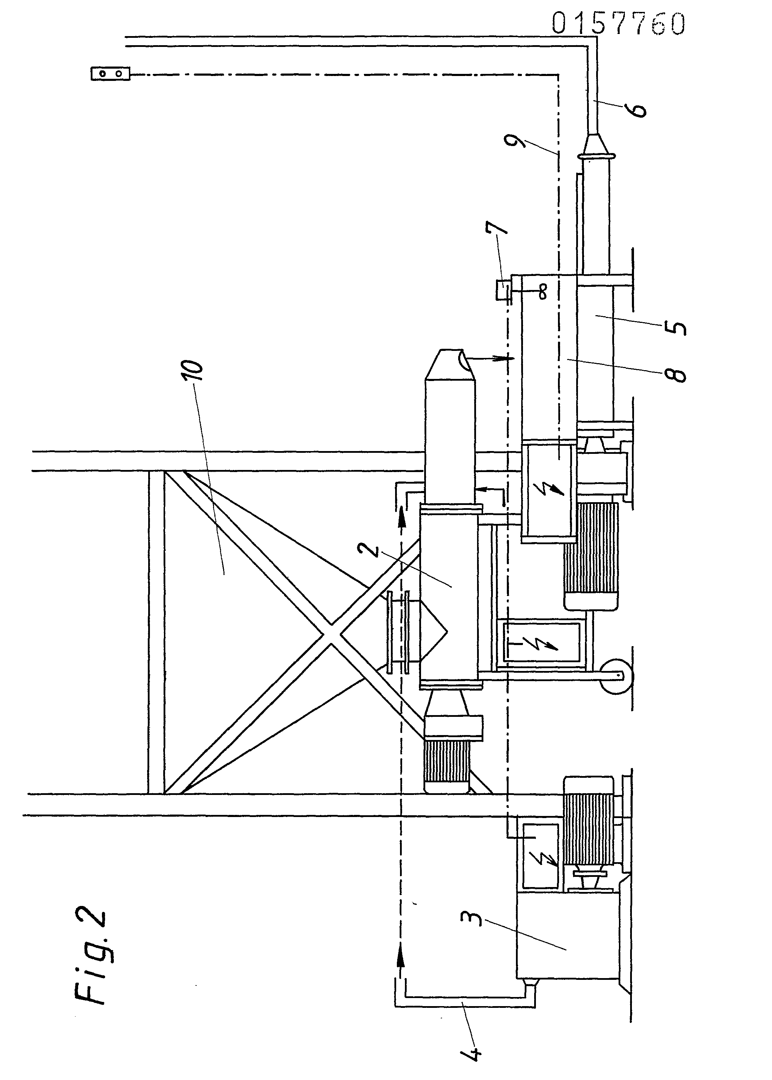

Die in Figur 2 gezeigte Ausführungsform stellt eine Gerätekombination dar, die in Verbindung mit einem Container 10 für das vorgemischte Bindemittel eine vollautomatische Herstellung des Porenanhydrits ermöglicht. Die Ansteuerung erfolgt durch eine Steuerleitung 9 im Verlegeort. Ansonsten stimmt die Gerätekombination in der Funktionsweise und Aufbau mit der in Figur 1 gezeigten Vorrichtung überein.

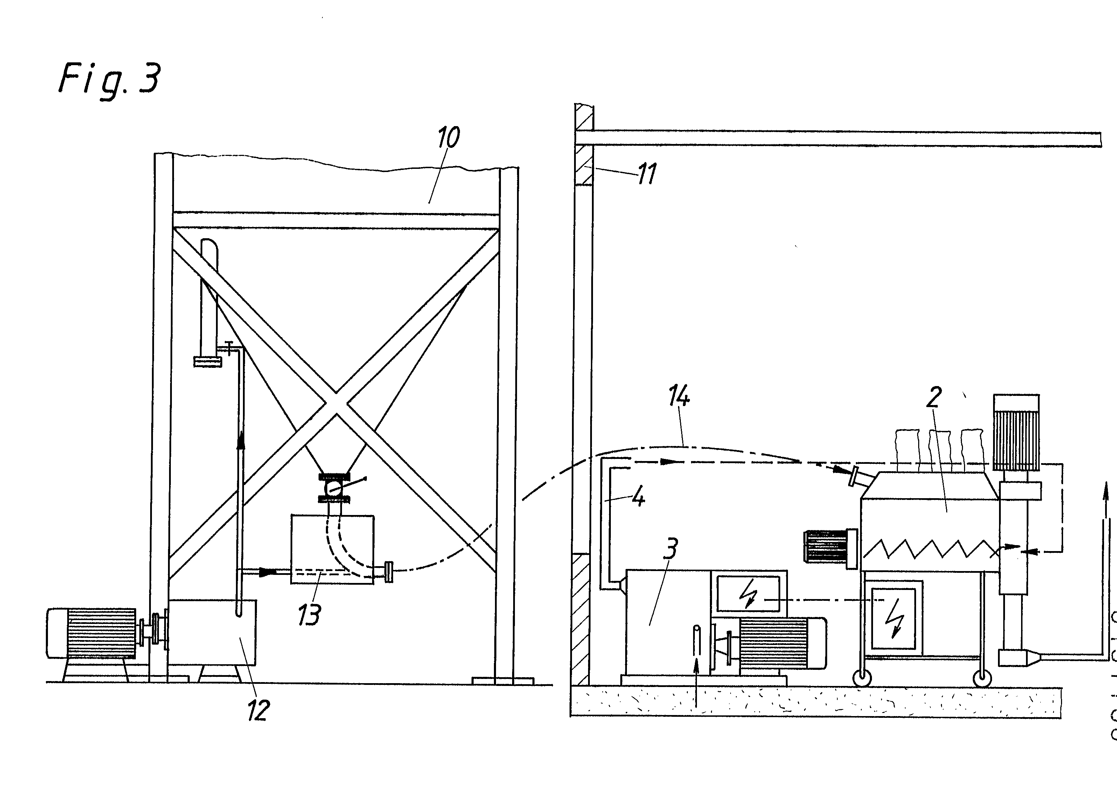

Die in Figur 3 gezeigte Ausführungsform besitzt einen außerhalb eines Gebäudes 11 stehenden Container 10 für Bindemittel, wogegen der Schaumgenerator 3, das Mischgerät 2, der Vorratsbehälter 8 und die Pumpe 5 im Gebäude stehen. Das trocken vorgemischte Bindemittel wird dem z.B. als Mischpumpe ausgebildeten Mischgerät 2 durch Druckluftförderung (Kompressor 12 und Fördergerät 13) aus dem Container 10 über eine flexible Leitung 14 zugeführt. Auch die Verbindungsleitung 4 zwischen dem Schaumgenerator 3 und dem Mischgerät 2 kann bei dieser Ausführungsform flexibel ausgebildet sein. Es handelt sich bei dem Mischgerät 2 beispielsweise um eine bekannte Feinputzmaschine, die auf Rädern fahrbar ist, wie sie für die Verarbeitung von Maschinenputzen verwendet wird. Die Leistung dieser Vorrichtung beträgt ca. 40 l/min. Da sich das Mischgerät 2 und der Schaumgenerator 3 im Gebäude befinden und nur das trockene Bindemittel vor dem Gebäude steht, ist eine Herstellung von Porenanhydrit auch im Winter möglich.

0157760

Patentansprüche:

1. Verfahren zum Herstellen von Belägen oder Gegenständen, die aus einer geschäumten Masse, die ein Bindemittel auf Kalziumsulfatbasis, das wenigstens zu 35, vorzugsweise wenigstens 40 % aus Anhydrit besteht, enthält, bestehen oder eine solche Masse enthalten, wobei aus Wasser, Luft und einem Schaumbildner ein Schaum erzeugt und mit dem das Bindemittel auf Kalziumsulfatbasis enthaltenden Bindemittel-Wassergemisch vermengt wird und die so erhaltene aufgeschäumte Masse gegossen oder anderweitig verarbeitet wird, dadurch gekennzeichnet, daß das Bindemittel in Form eines Bindemittelleims mit einem Wasser-Bindemittelfaktor von 0,1 bis 0,6, vorzugsweise 0,3 bis 0,45 verwendet wird und daß je Kilogramm Bindemittelleim 0,1 bis 3,0, vorzugsweise 0,3 bis 2,0 Liter des zuvor gebildeten Luft-Wasser-Schaumes zugemischt werden.

2. Verfahren nach Anspruch 1, dadurch gekennzeichnet, daß der Masse als Magerungsmittel bis zu 30 %, vorzugsweise bis zu 20 % natürlicher Anhydrit mit einer Korngröße von bis zu 1,0 mm zugesetzt wird.

3. Verfahren nach Anspruch 1 oder 2, dadurch gekennzeichnet, daß mit dem Bindemittelleim ein Schaum vermischt wird, dessen Rohdichte zwischen 0,02 und 0,1, vorzugweise bei 0,05 kg/dm³ liegt.

4. Vorrichtung zur Durchführung des Verfahrens nach einem der Ansprüche 1 bis 3 mit einem Schaumgenerator (3) und einem Mischgerät (2) zur Herstellung des aus Wasser und Bindemittel bestehenden Bindemittelleims, wobei das Mischgerät (2) einen Abschnitt zur Mischung des Bindemittels mit Wasser aufweist und daß am Ende dieses Abschnittes im Mischgerät (2) eine vom Schaumgenerator (3) kommende Leitung (4) für den Schaum einmündet, dadurch gekennzeichnet, daß unter der Austrittsöffnung des Mischgerätes (2) ein oben offener Vorratsbehälter (8) für das Gemisch aus Schaum und Bindemittelleim angeordnet ist und daß an dem Ausgang des Vorratsbehälters eine Fördereinrichtung (5), vorzugsweise eine Förderpumpe zum Fördern des Gemisches aus Schaum und Bindemittelleim zur Verarbeitungsstelle angeschlossen ist.

5. Vorrichtung nach Anspruch 4, dadurch gekennzeichnet, daß im Vorratsbehälter (8) ein Fühler (7) zum Erfassen des Füllgrades vorgesehen ist und daß die Antriebe des Schaumgenerators (3) und des Mischgerätes (2) bei Erreichen eines vorbestimmten Füllgrades des Vorratsbehälters (8) vom Fühler (7) angesteuert abschaltbar sind.

Fig.1

Fig.2

3/2

0157760

*Fig.3*